# EUROPEAN PATENT APPLICATION

(11) **EP 2 772 809 A1**
(43) Date of publication of application: **03.09.2014**
(21) Application number: 13001055.6
(22) Date of filing: 02.03.2013
(51) Int. Cl.: G05B 13/04

(54) **Method for determining dynamic behaviour of a motion control system**

(71) Applicant: ABB AG, 68309 Mannheim (DE)
(72) Inventor: Byner, Christoph, 68167 Mannheim (DE); Dai, Fan, 64673 Zwingenberg (DE); Mauser, Nicolas, 68167 Mannheim (DE); Becker, Oliver, 69198 Schriesheim (DE); Reisinger, Thomas, 68169 Mannheim (DE); Weickert, Thomas, 69231 Rauenberg (DE)

(57) **Abstract**

The invention is related to a method for determining dynamic behaviour of a motion control system (62) with at least a motion device (58) and a belonging controller (54), characterized by the following steps:
• build up a real model (60) of the motion control system with at least a real motion device (48) and a real controller (44),
• determining characteristic numbers (50) of the model (60) of the motion control system by use of a formal method of similitude or dimensional analysis,
• selecting a motion control system (62) with belonging controller (58) that's dynamic behaviour has to be determined and that's characteristic numbers (50) are the same,
• applying a respective value set of operational parameters to the model (60) of the motion control system and operate it therewith,
• measuring at least one respective physical system parameter describing at least in part the dynamic behaviour of the model (60) of the motion control system,
• applying a conversion on the at least one value of the at least one measured physical system parameter by use of the characteristic numbers (50) so that the at least one converted value indicates the corresponding dynamic behaviour of the motion control system (62).

## Description

The invention relates to a method for determining dynamic behaviour of a motion control system, a method for determining characteristic numbers of a motion control system and a test arrangement for automatic operation of a real model of a motion control system

Motion control systems typically comprise a larger number of controlled motors, drives or generators. Examples can be found in the robotic area, in industrial chemical plants or in a roller or steel mill or such. Robots for example might have 5, 6 or 7 degrees of freedom in movement, wherein each degree of freedom in movement typically requires an own drive. During the design and planning phase for such industrial installations it is desirable to predict the dynamic control behaviour of the motors or drives under certain circumstances which can vary within a wide band in such installations. Prediction of the dynamic control behaviour enables an optimal design of the whole system in advance.

Complex motion control systems can exhibit strong nonlinear behavior which cannot be modeled and analyzed easily with a mathematical model. Examples are nonlinear friction effects, motor/drive saturation and quantization effects caused by sensors. These effects can deteriorate but also improve motion behavior. For example, presence of friction can enable higher feedback gain which results in faster step responses. On the other hand, large quantization effects may lead to limit cycles. Also the presence of a controller might cause strong non-linear effects.

Disadvantageously within the state of the art is that analysis of such systems requires detailed modeling of the physical effects which can be very laborious and time consuming. Further it is not always clear what effects can be neglected and what effects have significant influence. Solving the equations which try to describe such a system can also be difficult since solver algorithms might get problems at discontinuities.

Based on this state of the art it is the objective of the invention to provide a method respectively means which enable a simplified but accurate determination of the dynamic behaviour of a motion control system.

This problem is solved by a method for determining dynamic behaviour of a motion control system with at least a motion device and a belonging controller. This is characterized by the following steps:
● build up a real model of the motion control system with at least a real motion device and a real controller,
● determining characteristic numbers of the model of the motion control system by use of a formal method of similitude or dimensional analysis,
● selecting a motion control system with belonging controller that's dynamic behaviour has to be determined and that's characteristic numbers are the same,
● applying a respective value set of operational parameters to the model of the motion control system and operate it therewith,
● measuring at least one respective physical system parameter describing at least in part the dynamic behaviour of the model of the motion control system,
● applying a conversion on the at least one value of the at least one measured physical system parameter by use of the characteristic numbers so that the at least one converted value indicates the corresponding dynamic behaviour of the motion control system.

Basic idea of the invention consists in building up a downscaled real - not mathematical - model of a motion control system which is similar to the original system and which is easily to handle. Measurements within this real motion control system incorporate the full real world complexity including non-linear effects since it is based on real hardware. A basically similar proceeding is used successfully for example for analysis of fluid dynamics.

The model of the motion control system has to have the same characteristic numbers than the actually motion control system that's behaviour shall be determined. Characteristic numbers are comparable with *eigenvalues* of a matrix for example and enable the transfer of physical parameters inbetween two different scaled motion control systems with the same characteristic numbers.

Examples for such characteristic numbers are Reynolds number, PrandtI or Nusselt-Number and allow transferring results between different systems. The proceeding how to determine such characteristic numbers is known from formal methods of similitude theory or dimensional analysis for example which are not explained in detail here. As long as the characteristic numbers are the same, the different systems will behave similarly even though they might exhibit different. In this case, measurements or simulations from one system can easily be transferred to other systems in order to allow investigations of systems, that can't be modeled and simulated accurately enough.

Using such a method for determining the behaviour of a motion control system provides in an advantageous way on one side high accuracy with - on the other side - avoiding building complex simulation models for all non-linear effects.

The problem of the invention is also solved by a method for determining characteristic numbers of a motion control system with at least a motion device and a belonging controller. This is characterized by the following steps:
● build up a real model of a motion control system with at least a real motion device and a real controller,
● determining physical operation parameters for the model of the motion control system,
● determining a number of value sets for the operational parameters,
● determining a desired control behavior of the controller,
● successively applying the respective value sets of operational parameters to the model of the motion control system and operate it therewith,
● determining the control behaviour of the real controller during operation and compare it with the desired control behaviour,
● in case of the difference is exceeding a given limit then variation of the controller parameters and applying the same value set of operational parameters again until the real controller behaviour corresponds to the desired control behaviour within the given limit,
● measuring and storing values of respective physical system parameters together with the belonging set of values of currently applied operational parameters into a measurement database,
● proceeding with the next value set of operational parameters,
● determining the characteristic numbers of the model of the motion control system based on the data in the measurement database by use of a formal method of similitude theory or dimensional analysis.

Objective of this aspect of the invention consists in providing an improved method of finding characteristic numbers for a motion control system. A controller is a component, which might cause strong non-linear effects. Furthermore the dynamic behaviour of a controller depends on several parameters which basically have to be considered for finding the characteristic numbers of a whole motion control system. Thus especially the presence of a controller makes it difficult to find characteristic numbers.

As known from the methods of similitude theory or of dimensional analysis independent operational parameters have to be determined if characteristic numbers of a system have to be found. The motion control system starts operation in case of applying values of those operational parameters thereto. In an easy case this could be a three phase voltage of a certain value and frequency which is applied to a motor. Anyhow in case of a system with a controller also the controller parameters are subject to be potential influence parameters.

To reduce the number of potential influence parameters it is foreseen to define certain desired dynamic controller behaviour which is assumed to be in an "optimal" range. This could be for example an overshoot during the control process in the range of at maximum 5% or 10% respectively a damping D of roughly 1/sqrt(2). Hence the effective parameters of the controller, which might be a P I D controller, have in principal not to be taken into consideration as potential influence parameters. Moreover it is assumed that effective parameters are determinable for each comparable controller which makes him working according to the desired control behaviour.

Thus a measurement database has to be provided, where on side the independent influence parameters are varied in a systematic way but where on the other side only those measurements affiliated with desired controller behaviour are included. By determining a number of value sets for systematic variation of the independent operational parameters the range of relevant possible combinations of the operational parameters is covered.

Those value sets are applied in a sequence to the model of a motion control system so that it gets step-wise operated with the respective parameter values. The control behaviour of the real controller during operation is determined and compared with the desired control behaviour. In case of a difference of the determined controller behaviour to the desired controller behaviour the effective controller parameters are varied and the model of a motion control system is operated again with the same value set of independent operational parameters until the determined controller behaviour corresponds to the desired controller behaviour. Of course there has to be foreseen a certain tolerance band for determining identity of controller behaviour, for example an acceptable deviation of +/- 5% of a reference value.

If effective controller parameters have been found which lead to the desired controller behaviour the respective measured values of physical system parameters are stored together with the belonging set of values of currently applied operational parameters into a measurement database.

Finally a measurement database respectively a catalogue of systematic varied measurements is provided. All measurements within this catalogue are affiliated with the same desired controller behaviour. This catalogue enables determining the characteristic numbers of the model of the motion control system by use of a formal method of similitude theory or dimensional analysis for example. Thus an improved way for finding characteristic numbers of a motion control system is provided, which advantageously reduces the number of independent operational parameters.

Of course it is also useful to determine more than one desired controller behaviour, for example a first one with an overshoot of 5% and a second one with an overshoot of 10%. In this case a belonging measurement catalogue would be generated for each of the desired controller behaviour. In an advantageous way this gives a further possibility of finding characteristic numbers of the model of a motion control system in case that there is no success for one of the desired control behaviour of the controller.

In preferred form of the methods according to the invention the at least one motion device is an electrical engine or generator. Such electrical devices are very common on one side and their electrical operational parameters are describable in a good way. Furthermore their behaviour is rather good transferable inbetween two similar devices of different size. Hence a motion system with an electrical drive is very suitable to be characterized with characteristic numbers.

In a further variant of the methods according to the invention the characteristic numbers of the model of the motion control system are determined by use of the PI - Theorem method. It has been found, that this method is suitable in a particular way for finding characteristic numbers of a motion control system.

In a further variant of the invention the characteristic numbers comprise the parameters *eigenfrequency* and *damping.* Those parameters are very suitable to describe major characteristics of system with rotating parts such a motor, engine or drive.

The problem of the invention is also solved by a test arrangement for automatic operation of a real model of a motion control system comprising
● a real model of a motion control system with at least a real motion device and a real controller which is foreseen to be operated by applying values of a set of physical operational parameters thereon,
● a computing unit which is foreseen to initialize and supervise operation of the real model of a motion control system,
● wherein means are foreseen to determine the control behaviour of the real controller during operation and compare it with a desired control behaviour,
● and wherein the test arrangement is foreseen - in case of a deviation of the behaviour is exceeding a given limit - for automatic variation of the parameters of the real controller and to trigger operation of the real model of a motion control system again by applying values of the same set of physical operational parameters thereon until the real controller behaviour corresponds to the desired control behaviour within the given limit,

As described above the determination of characteristic numbers of a model of a motion control system is simplified in an advantageous way by providing a catalogue with measurement data affiliated to certain controller behaviour.

Thus this aspect of the invention is directed to a test arrangement which is foreseen to automatically perform several measurement trials with different value sets of operational parameters preferably in a loop so that such a catalogue is generated with a minimum of manual effort. Core component of the test arrangement is on one side a real model of a motion control system and on the other side a computing unit which preferably initiates the different sequences of a loop test. The adaptation of the effective controller parameters is preferably also done by use of the computing unit, which comprises a belonging interface in this case. The computing unit as such might be an industrial PC for example which is foreseen to control the automatic overall process of a loop test, to determine a possible deviation of a control behaviour of the controller compared to the desired controller behaviour and to adapt the parameters of the controller accordingly.

To get values of different operational parameters applied to the motion control system preferably an electrical frequency inverter / drive s foreseen. In case of an electrical motor or engine, this can be a power-electronic based converter, which is for example suitable for generating a three-phase voltage or current with a - preferably variable - frequency.

Thus in a variant of the invention the test arrangement is foreseen for the automatic variation of the effective controller parameters. This can be as well by trial and error or by a systematic approximation to those controller parameters which cause the desired controller behaviour. In a further variant of the invention the test arrangement is also foreseen for a loop test. Preferably the computing unit comprises storage media for storing the measured results into a database.

As for the methods described above the at least one motion device is preferably an electrical engine or generator. The electrical operational parameters of those devices are describable in a good way and their behaviour is rather good transferable inbetween two similar devices of different size. Hence a motion system with an electrical drive is very suitable to be characterized with characteristic numbers.

Further advantageous embodiments of the invention are mentioned in the dependent claims.

The invention will now be further explained by means of an exemplary embodiment and with reference to the accompanying drawings, in which:
- Figure 1: shows an exemplary test arrangement for automatic operation of a real model of a motion control system,
- Figure 2: shows an exemplary table of analogy inbetween model of motion control system and motion control system and
- Figure 3: shows examples for dynamic controller behaviour.

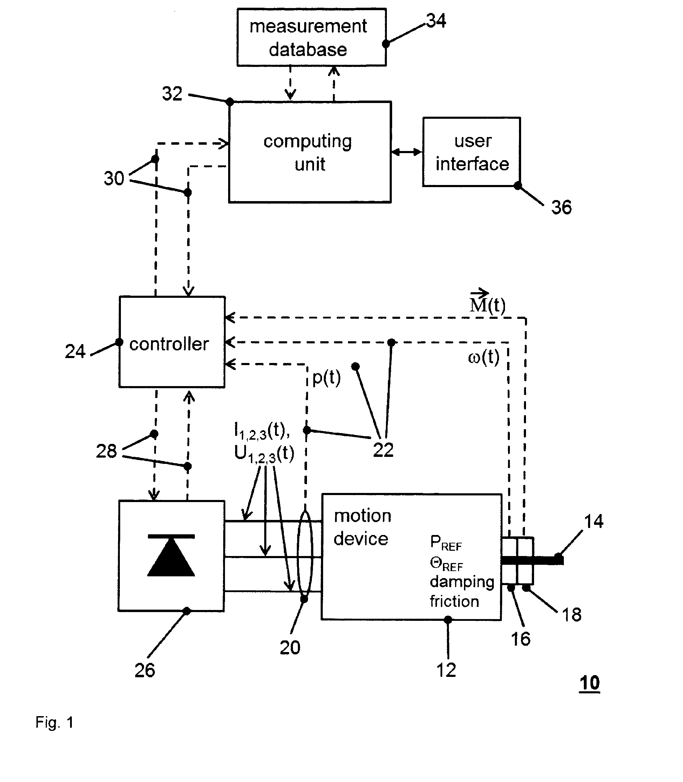

Fig. 1 shows an exemplary test arrangement 10 for automatic operation of a real model of a motion control system. A motion device 12, for example an electrical drive for a not shown paper mill, is characterized by frame data for example such as a rated reference power P_{REF}, a reference torque Θ_{REF}, its damping or its friction. The motion device 12 is electrically connected and driven by a booster 26, in this case a power electronic based three phase converter. The booster 26 is connected with a controller 24 by use of bi-directional communication lines 28. This enables the controller 24 to transmit desired reference values to the booster 26, for example a desired voltage and a desired frequency. On the other hand the booster 26 is also foreseen to supply internal control values back to the controller to provide feedback data.

The controller also gets feedback data from an exemplary measurement device 16 for the actual angle of revolution respectively the angular frequency ω(t) and/or the actual torque M(t). Furthermore the controller 24 gets feedback from an exemplary measurement device 20 for electrical power p(t), whereas this parameter is basically derived from voltages U_{1,2,3}(t) and currents I_{1,2,3}(t) of the three electrical phases. All those feedback values are provided over data lines 22 from the measurement devices 16, 18, 20 to the controller 24 and are subject to influence the control behaviour of the controller 24. Of course also other suitable system parameters might be determined by respective measurement devices and provided to the controller 24.

The controller 24 is in addition connected to a computing unit 32 by use of bidirectional communication lines 30. This enables the computing unit 32 on one side to start operation of the motion control system - comprising the motion device 12, the controller 24 and the booster 26 - by applying respective values of operational parameters to the controller 24. Thus it is possible to initiate different measurement trials, which are coordinated by the computing unit 32. A belonging executable control software program is allocated within the storage of the computing unit 32.

The computing unit 32 is foreseen to receive feedback data from the controller 24. This data are on one side values which are required to operate the motion control system in a loop, for example *"system is ready", "system is running", "system has* a *fault"* or such. On the other hand the computing unit is also foreseen for receiving feedback data, either at least some of the directly determined feedback values or secondary values derived therefrom. But also values describing the dynamic behaviour of the controller 24 during operation are provided to the computing unit 32 directly or indirectly, for example the height of an overshoot or such. Thus it is possible to compare the dynamic behaviour of the controller 24 with a desired behaviour, which is preferably provided within the storage media of the computing unit 32. A user interface 36 is foreseen, which enables a user for example to enter a desired dynamic behaviour of the controller 24 into the computing system 32.

Furthermore the computing unit 32 is also foreseen to modify the effective control parameters of the controller 24 and make them effective so that they can be varied in case that the determined controller behaviour does not correspond to the desired controller behaviour. If the respective controller behaviour finally corresponds to the desired one the belonging system and operational parameters are stored into a measurement database 34, which is preferably allocated within storing means of the computing unit 32.

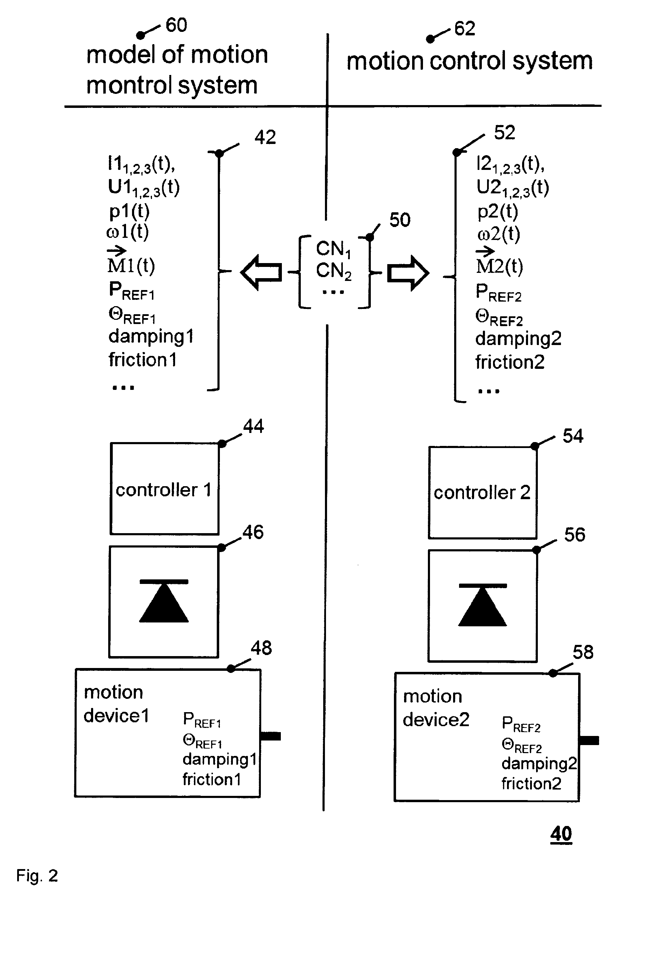

Fig. 2 shows an exemplary table of analogy 40 inbetween a model 60 of a motion control system and a motion control system 62. Both systems 60, 62 are similar and have comparable characteristics but differ for example in their size, for instance by a factor of 20 ... 1000 concerning the respective rated power. Thus the model 60 of a motion control system comprises in principal the same components, namely a motion device 48, a booster 46, and a controller 44, than the motion control system 62 with its basic components motion device 58, booster 56 and controller 54.

The motion devices 48, 58 differ as well in their size than the boosters 46, 56 whereas the controllers 44, 54 are in principal the same or even identical. Both motion systems 60, 62 have comparable physical system parameters 42 respectively 52. This is for example a current i(t), a voltage u(t), a power p(t), an angular frequency ω(t) or such. Also those physical system parameters differ in their values, even they are in principal comparable. By using characteristic numbers 50, which are the same for both systems 60, 62 and which are comparable to *eigenvalues* of the system, a conversion inbetween both sets of physical system parameters 42, 52 can be applied in related cases. Thus it is possible to perform a measurement of the dynamic behaviour in the model of a motion control system 60 and to transfer the respective results to the "real" motion control system 62.

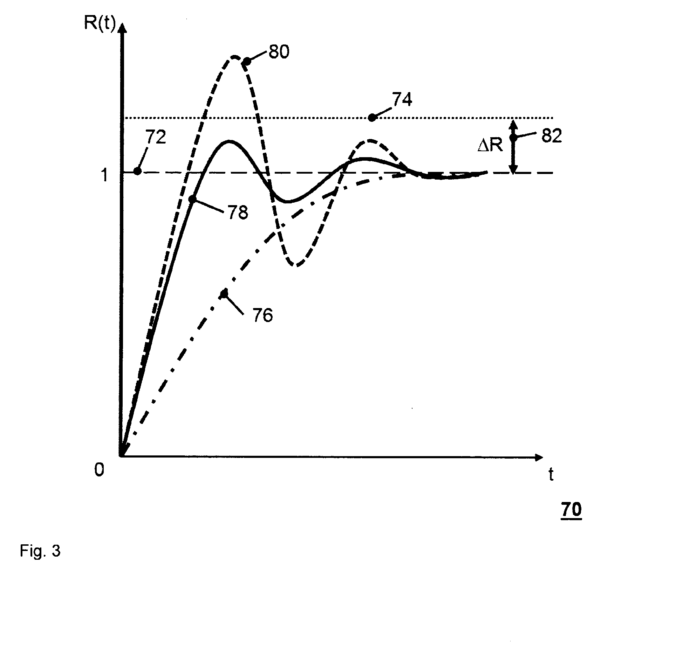

Fig. 3 shows examples 70 for dynamic controller behaviour. A controller in a closed loop control is characterized by command variable, which corresponds to its input and by an actuating variable, which corresponds to its output. If the input variable is changing, also the output variable is changing towards a new target output 72 in a dynamic process. The dynamic process of changing the output variable of the controller is describing the dynamic controller behaviour.

Dependent on the characteristic of the effective controller parameters the dynamic process of changing of the output variable might be slower as shown in the curve with reference number 76. Here a higher damping factor has been chosen so that the controller behaviour is one side rather slow, but on the other side there is no overshoot. The curve with the reference number 80 shows another variant of controller behaviour which is on one side faster but has on the other side a rather high overshoot.

The curve with the reference number 78 shows a behaviour inbetween the behaviour of the curves 76 and 80. This is one side faster but has on the other side only a rather small overshoot. Such a controller behaviour can considered to be the best choice for most applications. An easy way of describing the dynamic behaviour of a controller consists in determining the overshoot. For example all controller behaviour having an overshoot within a given band 82 might considered to be acceptable.

**List of reference signs**

| | |
|---|---|
| 10 | exemplary test arrangement for automatic operation of a real model of a motion control system |
| 12 | exemplary motion device |
| 14 | driven shaft |
| 16 | measuring device for angle of revolution |
| 18 | measuring device for torque |
| 20 | measuring device for power |
| 22 | data lines |
| 24 | exemplary controller |
| 26 | exemplary booster |
| 28 | communication lines |
| 30 | communication lines |
| 32 | computing unit |
| 34 | catalogue database |
| 36 | user interface |
| 40 | table of analogy inbetween model of motion control system and motion control system |
| 42 | exemplary physical parameters of motion control system |
| 44 | controller of motion control system |
| 46 | booster of motion control system |
| 48 | motion device of motion control system |
| 50 | exemplary set of characteristic numbers |
| 52 | exemplary physical parameters of motion control system |
| 54 | controller of motion control system |
| 56 | booster of motion control system |
| 58 | motion device of motion control system |
| 60 | exemplary motion control system |
| 62 | exemplary model of a motion control system |
| 70 | examples for dynamic controller behaviour |
| 72 | exemplary target output of controller |
| 74 | maximum acceptable output of controller |
| 76 | first example for controller behaviour |
| 78 | second example for controller behaviour |
| 80 | third example for controller behaviour |
| 82 | given band for overshoot |

## Claims

1. Method for determining dynamic behaviour of a motion control system (62) with at least a motion device (58) and a belonging controller (54), **characterized by** the following steps:
● build up a real model (60) of the motion control system with at least a real motion device (48) and a real controller (44),
● determining characteristic numbers (50) of the model (60) of the motion control system by use of a formal method of similitude or dimensional analysis,
● selecting a motion control system (62) with belonging controller (58) that's dynamic behaviour has to be determined and that's characteristic numbers (50) are the same,
● applying a respective value set of operational parameters to the model (60) of the motion control system and operate it therewith,
● measuring at least one respective physical system parameter describing at least in part the dynamic behaviour of the model (60) of the motion control system,
● applying a conversion on the at least one value of the at least one measured physical system parameter by use of the characteristic numbers (50) so that the at least one converted value indicates the corresponding dynamic behaviour of the motion control system (62).

2. Method for determining characteristic numbers of a motion control system (60, 62) with at least a motion device (12, 48, 58) and a belonging controller (24, 44, 54), comprising the following steps:
● build up a real model (60) of a motion control system with at least a real motion device (48) and a real controller (44),
● determining physical operation parameters for the model (60) of the motion control system,
● determining a number of value sets for the operational parameters,
● determining a desired control behavior (70) of the controller (44),
● successively applying the respective value sets of operational parameters to the model (60) of the motion control system and operate it therewith,
● determining the control behaviour of the real controller during (44) operation and compare it with the desired control behaviour (70),
● in case of the difference is exceeding a given limit then variation of the controller parameters and applying the same value set of operational parameters again until the real controller behaviour corresponds to the desired control behaviour (70) within the given limit,
● measuring and storing values of respective physical system parameters together with the belonging set of values of currently applied operational parameters into a measurement database,
● proceeding with the next value set of operational parameters,
● determining the characteristic numbers (50) of the model (60) of the motion control system based on the data in the measurement database by use of a formal method of similitude theory or dimensional analysis.

3. Method according to claim 2, **characterized in that** it is done for at least one further desired controller behaviour.

4. Method according to claim 1, **characterized in that** the step of determining characteristic numbers (50) of the model (60) of the motion control system comprises the steps according to claim 2 or 3.

5. Method according to any of the proceeding claims, **characterized in that** the at least one motion device (12, 48, 56) is an electrical engine or generator.

6. Method according to claim 1 or 4 or 5, **characterized in that** the characteristic numbers (50) of the model (60) of the motion control system are determined by use of the PI -Theorem method.

7. Method according to any of the proceeding claims, **characterized in that** the characteristic numbers (50) comprise the parameters *eigenfrequency and damping.*

8. Test arrangement (10) for automatic operation of a real model (60) of a motion control system comprising
● a real model (60) of a motion control system with at least a real motion device (48) and a real controller (44) which is foreseen to be operated by applying values of a set of physical operational parameters thereon,
● a computing unit (32) which is foreseen to initialize and supervise operation of the real model (60) of a motion control system,
● wherein means are foreseen to determine the control behaviour of the real controller during operation and compare it with a desired control behaviour (70),
● and wherein the test arrangement is foreseen - in case of a deviation of the behaviour is exceeding a given limit - for automatic variation of the parameters of the real controller (44) and to trigger operation of the real model (60) of a motion control system again by applying values of the same set of physical operational parameters thereon until the real controller (44) behaviour corresponds to the desired control behaviour (70) within the given limit,

9. Test arrangement according to claim 8, **characterized in that** the computing unit (32) is foreseen to automatically operate the real model (60) of a motion control system in a loop by applying values of a sequence of several sets of physical operational parameters thereon.

10. Test arrangement according to claim 8 or 9, **characterized in that** the at least one real motion device (48) is an electrical engine or generator.
